# EUROPEAN PATENT APPLICATION

(11) **EP 1 719 883 A1**
(43) Date of publication of application: **08.11.2006**
(21) Application number: 05291102.1
(22) Date of filing: 23.05.2005
(51) Int. Cl.: F01N 3/20, F01N 3/08, F01N 3/28, B01D 53/94, F01N 3/023

(54) **System and method for purifying exhaust gas of diesel engine**

(30) Priority: 07.05.2005 KR 2005038199
(71) Applicant: Neophotech Inc., Yongin-si, Gyeonggi-do 449-860 (KR)
(72) Inventor: Son, Geon Seog, 107-1903 Hyundai Apt., Yongin-si, Gyeonggi-do 449-709 (KR)
(74) Representative: Intes, Didier Gérard André

(57) **Abstract**

The present invention relates to a system for purifying exhaust gas of a diesel engine. An object of the present invention is to provide a system for purifying exhaust gas of a diesel engine, which is particularly suitable to the diesel car engine that usually operates in a lean burn condition without the occurrence of a periodic high-load condition in view of its combustion characteristics, and by which unnecessary increase in fuel consumption can be avoided by solving the problems in the prior art in which additional fuel has been further injected to create an atmosphere where NOx can be reduced. To this end, the system (100) for purifying the exhaust gas of the diesel engine comprises a first reactor (120) for at least partially oxidizing HC or particulate matters in the exhaust gas; a second reactor (140) for collecting the particulate matters in the exhaust gas passed through the first reactor (120) onto a diesel particulate filter and then partially oxidizing the collected particulate matters to regenerate the diesel particulate filter; a third reactor (160) which includes a light source, photocatalyst responsive thereto and adsorber, thereby adsorbing NOx in the exhaust gas passed through the second reactor (140) with the adsorber and removing NOx through reduction reaction using a reducing agent generated by partially oxidizing the particulate matters collected in the second reactor (140), and a controller (200) for controlling intensity of light from the light source according to concentration of the exhaust gas.

## Description

### BACKGROUND OF THE INVENTION

### 1. Field of Invention

The present invention relates to a system and method for purifying exhaust gas or soot of a diesel engine.

### 2. Description of the Prior Art

Exhaust gas emitted from a diesel engine is a mixture of air pollutants composed of carbon monoxide (CO), unburned hydrocarbon (HC), nitrogen oxide (NOx), particulate matters containing soluble organic fractions (SOF), and the like. The permissible amount of exhaust gas emitted from a diesel engine is generally regulated by law and often determined by means of the management and design of engine and the post processing of exhaust gas.

In a general diesel engine, HC and CO are purified to a predetermined level by means of Pt-based diesel oxidation catalyst (DOC), NOx emission is controlled by means of an exhaust gas recirculation (EGR) system of a diesel engine, and particulate matters (PM) are collected by means of a diesel particulate filter (DPF) such that the amount of particulate matters to be discharged will be controlled within a predetermined range. However, such a technique is performed by causing particulate matters collected in the diesel particulate filter to be burnt at a high temperature using an additional device such as heater or burner or by causing the particulate matters to be oxidized using catalyst coated on an inner surface of the diesel particulate filter to regenerate the filter. Therefore, its utility is greatly reduced.

As another prior art, the Johnson Matthey company has proposed such a technique that a diesel particulate filter is regenerated by causing NO in exhaust gas to be oxidized into NO₂ having superior oxidation activity upstream of the diesel particulate filter and causing particulate matters collected in the diesel particulate filter to be oxidized using the oxidized NO₂ as an oxidizing agent. Such a technique is disclosed in EP-A-0341832 and U.S. Patent No. 4,902,487 and is well known in the art as a trademark CRT™.

According to the aforementioned technique, however, platinum (Pt) susceptible to the poisoning due to sulfur existing abundantly in diesel exhaust gas is used as an oxidizing agent for causing NO to be oxidized into NO₂. Therefore, there is a limitation in that only fuel such as ultra low sulfur diesel (ULSD) should be used. Further, since about 3 to 8 % of NOx can be simply reduced from the exhaust gas, there is a need for an additional technique for reducing nitrogen oxide.

In this connection, the Johnson Matthey Company has developed a four-way post-processing system called a SCRT™ system in which selective catalytic reduction (SCR) catalyst is applied to a diesel particulate filter. This system is known as a system capable of reducing particulate matters and nitrogen oxide by about 75 to 90 % as well as removing HC and CO. However, this system requires post-processed volume of the exhaust gas 13.6 times as large as the engine displacement. Therefore, it is tentatively applied to a large diesel engine but came to light that its utility is greatly lowered. Further, the poisoning problem due to sulfur still remains.

Furthermore, Toyota Motor Corporation in Japan has developed a diesel particulate NOx reduction (DPNR) system by which both particulate matters and nitrogen oxide can be reduced by causing NOx adsorber catalyst to be coated onto a general diesel particulate filter (DPF) and platinum oxidation catalyst to be placed onto the diesel particulate filter. This system is disclosed in Japanese Patent Laid-Open Publication No. (Hei) 6-159037 and the like.

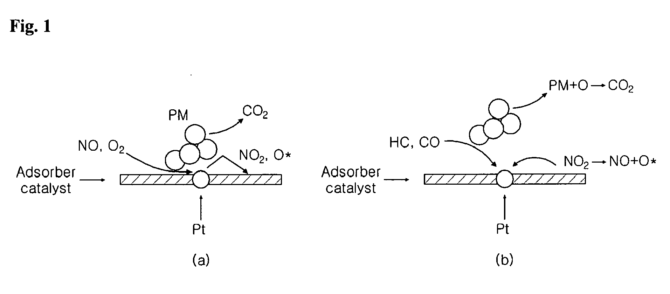

The conventional DPNR technique will be described with reference to Fig. 1. In Fig. 1 (a) showing a lean bum condition of a diesel engine, O₂ and NO react with each other near oxidation catalyst, i.e. Pt, and active oxygen O* and NO₂ are produced. Further, NO₂ exists in adsorber catalyst in the form of its salt. Then, particulate matters (PM) are oxidized by means of O* so produced and O₂ in the exhaust gas, and the oxidized PM again reacts with O₂ in the exhaust gas to be oxidized into CO₂.

In addition, in Fig. 1 (b) showing a rich bum condition of a diesel engine, NOx, which has been adsorbed to the adsorber catalyst in the form of its salt by means of hot temperature and instantaneous rich exhaust conditions, is converted into NO and O* which in turn are discharged. Further, the discharged NO and O* react with HC and CO through oxidation catalytic reaction and are converted into CO₂, H₂O and N₂. Furthermore, even under the rich bum condition where there is shortage of oxygen, the particulate matters (PM) reacts with O* emitted from the adsorber catalyst such that it can be oxidized into CO₂.

However, the DPNR system of Toyota Motor Corporation in which a continuous regeneration approach is employed still has the following technical limitations. First, since platinum is used as oxidation catalyst, reduction in performance resulting from the poisoning due to sulfur existing abundantly in diesel exhaust gas cannot be avoided. Second, since the adsorbed nitrogen oxide can be purified only if a rich bum condition should be periodically provided, high fuel efficiency that is one of most significant advantages of a diesel engine is lowered. Further, there are problems in that costs are increased because an additional fuel injection system should be installed to an upper end of the DPNR system in order to provide a periodic rich bum condition, and that a stable operation cannot be performed because the post injection should be made in the fuel injection system of the diesel engine.

In addition, since there is a limit to the amount of NOx adsorbed by the adsorber catalyst under the lean bum condition of a diesel engine, the diesel engine needs to be periodically operated under a rich bum condition or at a stoichiometric air-fuel ratio where there is shortage of oxygen. This means that the aforementioned conventional technique is not suitable for a diesel car engine that usually operates in a lean bum condition without the occurrence of a periodic high-load condition in view of its combustion characteristics.

Furthermore, the conventional technique has the following problems. That is, high activation temperature and resultant high energy are required to allow platinum constituting the oxidation catalyst to have sufficient oxidizing power, and the platinum oxidation catalyst cannot provide any functions of purifying the exhaust gas until it reaches the activation temperature.

Moreover, according to the conventional technique, since HC and CO are rapidly oxidized by means of the platinum oxidation catalyst under the rich bum condition where NOx adsorber catalyst can be regenerated, the reduction of NOx can be prevented. To avoid this, the conventional technique adopts the post injection method in which greater amount of fuel is injected in consideration of the amount of HC and CO under the rich bum condition. However, this results in waste of diesel fuel.

### SUMMARY OF THE INVENTION

Accordingly, an object of the present invention is to provide a system and method for purifying exhaust gas or soot of a diesel engine, which is particularly suitable to a diesel car engine that usually operates in a lean bum condition without the occurrence of a periodic high-load condition in view of its combustion characteristics.

Another object of the present invention is to provide a system and method for purifying exhaust gas, by which fuel consumption can be reduced by solving the problems of the related art in which additional fuel has been further injected to create an atmosphere where NOx can be reduced.

A further object of the present invention is to provide a system and method for purifying exhaust gas of a diesel engine, by which harmful materials such as HC, CO, PM and NOx can be purified at a relatively low temperature by solving the problems of the prior art in which catalyst that is activated under the high exhaust temperature is used, and exhaust gas purification efficiency can be enhanced due to the structure that does not require the time needed for activating the catalyst.

A still further object of the present invention is to provide a system and method for purifying exhaust gas of a diesel engine, by which efficiency of purifying exhaust gas can be improved and waste of energy needed in purifying the exhaust gas can also be reduced by controlling components, such as HC, CO, C or NO₂, in the exhaust gas as oxidizing or reducing agents for stepwise oxidation or reduction.

According to an aspect of the present invention for achieving the objects, there is provided a system for purifying exhaust gas of a diesel engine, which comprises a first reactor for at least partially oxidizing HC or particulate matters in the exhaust gas; a second reactor for collecting the particulate matters in the exhaust gas passed through the first reactor onto a diesel particulate filter provided therein and then oxidizing the collected particulate matters to regenerate the diesel particulate filter; a third reactor which includes a light source, photocatalyst responsive thereto and adsorber, thereby adsorbing NOx in the exhaust gas passed through the second reactor with the adsorber and removing NOx through reduction reaction using a gaseous reducing agent generated by oxidizing the particulate matters collected in the second reactor; and a controller for controlling intensity of light from the light source according to concentration of the exhaust gas. According to the present invention, therefore, NOx removal efficiency can be improved by oxidizing at least a part of the particulate matters collected on the second reactor into gaseous ones using a light source in the third reactor such that the third reactor is in an atmosphere state where NOx can be reduced. Further, the fuel consumption can be greatly reduced since NOx can be sufficiently removed without additional supply of the fuel. Herein, a concentration of the exhaust gas means including the concentration of respective components in the exhaust gas as well as the concentration of oxygen in the exhaust gas.

Here, it is preferred that the first reactor include a light source of which light intensity can be adjusted by the controller, and photocatalyst responsive to the light source, thereby at least partially oxidizing HC or particulate matters through photocatalytic oxidation reaction.

Further, it is preferred that the second reactor include a light source of which light intensity can be adjusted by the controller, and photocatalyst responsive to the light source, thereby oxidizing the particulate matters collected on the diesel particulate filter through the photocatalytic oxidation reaction to regenerate the diesel particulate filter.

Preferably, the first reactor causes a part of HC, CO or particulate matters to be oxidized into CO₂ and NO to be oxidized into NO₂, the second reactor uses NO₂ in the exhaust gas passed through the first reactor as an oxidizing agent for oxidation of the particulate matters, and the third reactor uses at least one of the gaseous HC and CO and the solid C, which have been partially oxidized in the second reactor, as a reducing agent for reduction of NOx.

Further, it is preferred that the first, second and third reactors be consecutively installed within a casing having exhaust gas inlet and outlet and that the light source be a low temperature plasma unit for irradiating low temperature plasma onto the photocatalyst.

More preferably, the low temperature plasma unit includes a rod-shaped ground electrode, a mesh-type discharge electrode for covering an exhaust gas passage in each reactor, and a ceramic insulation for supporting the discharge electrode in the reactor. In addition, the photocatalyst is preferably TiO₂. Alternatively, the filter in the second reactor is alternately plugged with conductive metal at its intake inlets and exhausts outlets, and said metal function as electrodes.

According to another aspect of the present invention, there is provided a method for purifying exhaust gas of a diesel engine, comprising the steps of (a) at least partially oxidizing HC, CO, NO or particulate matters in the exhaust gas; (b) regenerating a diesel particulate filter by collecting the particulate matters in the exhaust gas passed through step (a) onto the diesel particulate filter and then oxidizing the collected particulate matters using NO₂ obtained through oxidation of NO as a reducing agent; and (c) adsorbing NOx in the exhaust gas passed through step (b) with adsorber and regenerating the adsorber through the NOx reduction by causing at least one of HC, CO and C obtained in step (b) to be used in the NOx reduction reaction.

At this time, it is preferred that the NOx reduction reaction be controlled in step (c) by controlling intensity of light causing photocatalytic reaction, that an amount of NOx to be used as an oxidizing agent in step (b) be adjusted in step (a) by controlling intensity of light causing photocatalytic reaction, and that an amount of HC, CO and C to be used as a reducing agent in step (c) can be adjusted in step (b) by controlling intensity of light causing photocatalytic reaction.

Preferably, a low temperature plasma unit for irradiating low temperature plasma onto photocatalyst is used as a light source causing the photocatalytic reaction.

According to a further aspect of the present invention, there is provided a method for purifying exhaust gas of a diesel engine, comprising the steps of at least partially oxidizing HC, CO, NO or particulate matters in the exhaust gas through photocatalytic oxidation reaction using a light source, in a first reactor; collecting the particulate matters in the exhaust gas passed through the first reactor onto a diesel particulate filter and then oxidizing the collected particulate matters through photocatalytic oxidation reaction using a light source, in a second reactor; and adsorbing NOx in the exhaust gas passed through the second reactor with adsorber and removing NOx through photocatalytic reduction reaction using a light source, wherein an amount of NO₂ to be generated as an oxidizing agent in the second reactor, an amount of HC and CO to be generated as a reducing agent in the third reactor and an amount of NOx to be reduced in the third reactor are adjusted by controlling the light sources of the respective reactors.

### BRIEF DESCRIPTION OF THE DRAWINGS

The above and other objects, features and advantages of the present invention will become apparent from the following description of a preferred embodiment given in conjunction with the accompanying drawings, in which:
Fig. 1 is a view illustrating an operating principle of a system for purifying exhaust gas of a diesel engine according to the prior art;
Fig. 2 is a view schematically showing the configuration of a system for purifying exhaust gas of a diesel engine according to an embodiment of the present invention;
Fig. 3 is a sectional view showing a purifier constituting a main part of the exhaust gas purification system shown in Fig. 2;
Fig. 4 is a sectional view taken along line I-I of Fig. 3 for explaining a first reactor of the exhaust gas purification system;
Fig. 5 a sectional view taken along line II-II of Fig. 3 for explaining a second reactor of the exhaust gas purification system;
Fig. 6 is a sectional view taken along line III-III of Fig. 3 for explaining a third reactor of the exhaust gas purification system; and
Fig. 7 is a diagram schematically illustrating a process of stepwise removing pollutants from the exhaust gas in respective reactors of the exhaust gas purification system shown in Figs. 2 to 6.

### DETAILED DESCRIPTION OF THE PREFERRED EMBODIMENT

Hereinafter, preferred embodiments of the present invention will be described in detail with reference to the accompanying drawings.

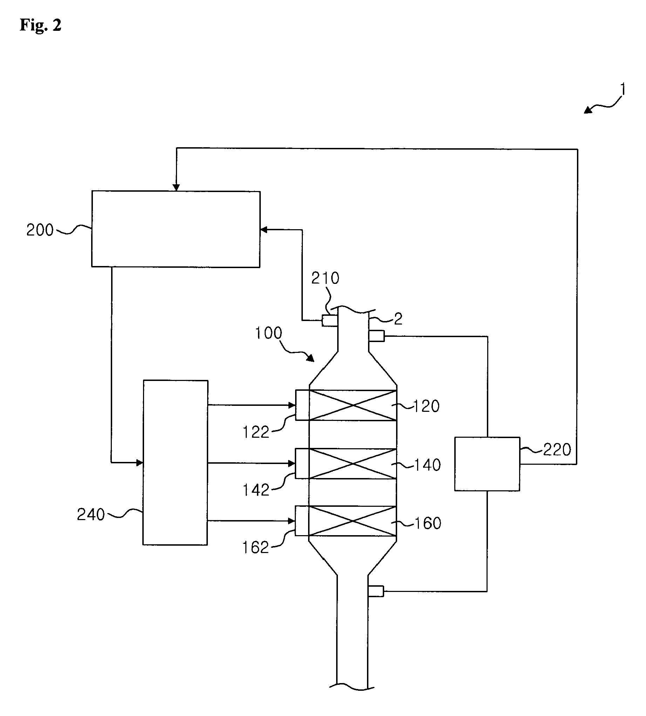

As shown in Fig. 2, a system 100 for purifying exhaust gas according to an embodiment of the present invention comprises first, second and third reactors 120, 140 and 160 that are successively installed to an exhaust pipe 2 of a diesel engine to successively purify pollutants from the exhaust gas. The reactors 120, 140 and 160 are formed into a single purifier 100 for successively purifying HC, CO, PM, NOx and the like from the exhaust gas, as explained later. In the invention, the reactors are a carrier or honeycomb monolith containing catalyst, or a filter according to their functions. Further they may contain plasma producing apparatus.

Each of the reactors 120, 140 and 160 comprises TiO₂ photocatalyst that reacts with light emitted from a predetermined light source, more specifically, low temperature plasma emitted from each of low temperature plasma units 122, 142 and 162 and causes photocatalytic reaction. At this time, the photocatalytic reaction varies according to the intensity of light from a light source, and particularly, the intensity of low temperature plasma, and each of the low temperature plasma units is controlled by a controller 200 according to oxygen concentration (or dilution concentration) of the exhaust gas and the like.

To this end, an oxygen sensor 210 for measuring oxygen concentration of the exhaust gas is provided upstream of the purifier 100. The controller 200 determines whether a diesel engine operates in a lean or rich bum condition, for example, according to an oxygen concentration value measured by the oxygen sensor 210, and wholly or individually controls the photocatalytic reactions of the reactors 120, 140 and 160 by controlling an electric power source 240 of the low temperature plasma units 122, 142 and 162 according to the determination. Further, a differential pressure sensor 220 for measuring the pressure difference between the upstream and downstream of the purifier is provided such that the controller 200 can also control the supply of electric power to the aforementioned low temperature plasma units 122, 142 and 162 in consideration of the differential pressure of the exhaust gas measured by the differential pressure sensor 220.

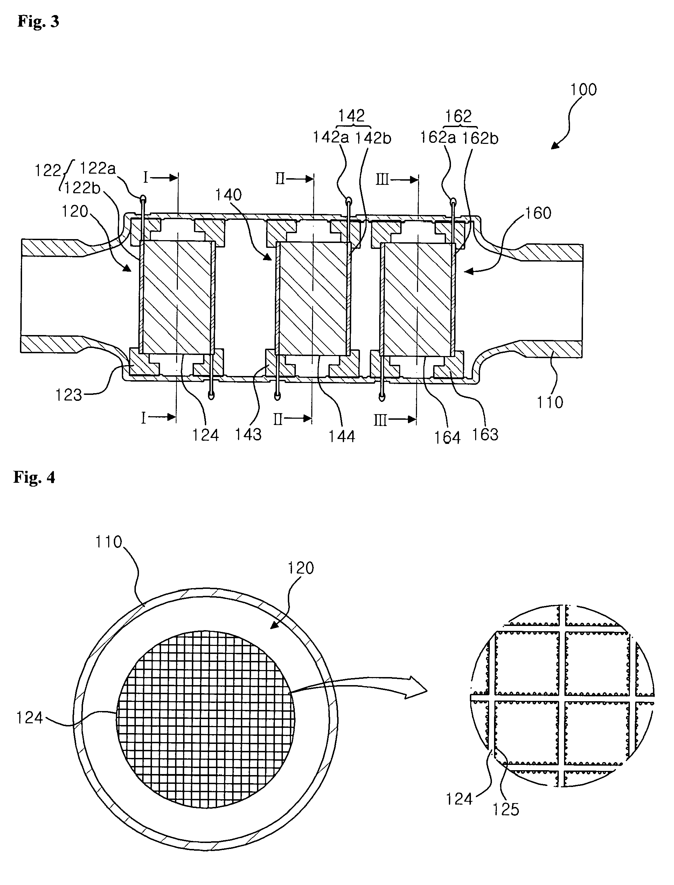

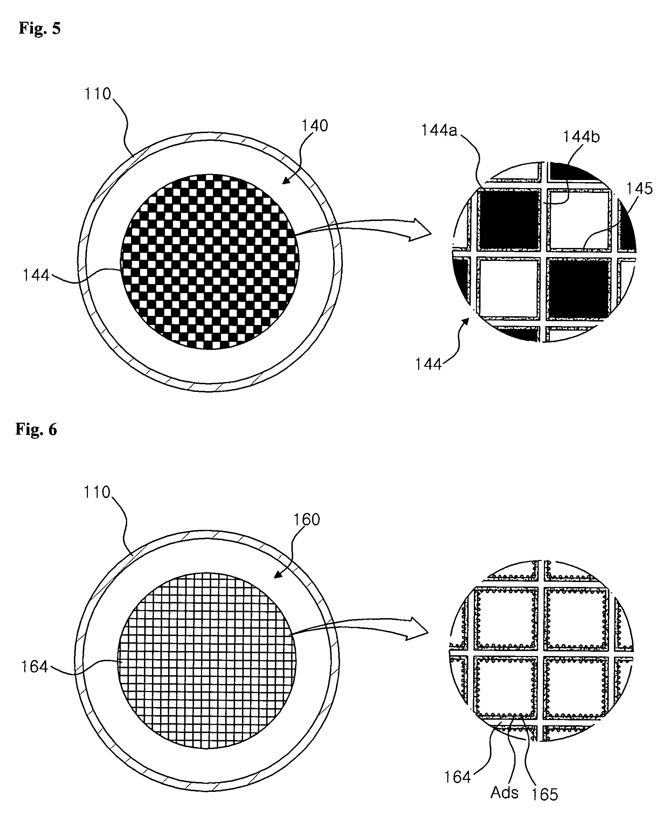

Fig. 3 is a sectional view of the purifier 100 shown in Fig. 2, Fig. 4 is a sectional view taken along line I-I of Fig. 3, Fig. 5 is a sectional view taken along line II-II of Fig. 3, and Fig. 6 is a sectional view taken along line III-III of Fig. 3.

As shown in Fig. 3, the purifier 100 according to the embodiment of the present invention includes a stainless steel casing 110 in which the first, second and third reactors 120, 140 and 160 are installed. The casing 110 is configured in such a manner that its front and rear ends are connected to the exhaust pipe 2 to allow the exhaust gas flowing out of the diesel engine to be introduced through the upstream side thereof and the exhaust gas purified in the first, second and third reactors 120, 140 and 160 to be discharged through the downstream side thereof.

Further, the reactors 120, 140 and 160 include carriers 124, 144 and 164; ceramic supports 123, 143 and 163 installed at front and rear ends of the carrier 124, 144 and 164 for supporting the carriers; and low temperature plasma units 122, 142 and 162; respectively. The carriers 124, 144 and 164 are supported in parallel with one another within the casing 110 by means of the ceramic supports 123, 143 and 163, respectively. Further, the low temperature plasma units 122, 142 and 162 are installed at both front and rear ends of the carriers 124, 144 and 164, respectively. The low temperature plasma units 122, 142 and 162 include rod-shaped ground electrodes 122a, 142a and 162a that are installed at both front and rear ends of the carriers 124, 144 and 164 and penetrate through the ceramic supports 123, 143 and 163; and mesh-type discharge electrodes 122b, 142b and 162b that cover the passages of the exhaust gas at the front and rear ends of the carriers 124, 144 and 164; respectively. At this time, the aforementioned ceramic supports 123, 143 and 163 perform a function of insulating the ground electrodes 122a, 142a and 162a, the discharge electrodes 122b, 142b and 162b, and the casing 110 from one another in addition to the function of supporting the carriers 124, 144 and 164, respectively.

Referring to Figs. 3 and 4, the first reactor 120 includes the honeycomb ceramic carrier 124 with TiO₂ photocatalyst 125 coated thereon. The photocatalyst 125 reacts with the low temperature plasma created in the low temperature plasma unit 122 to cause the photocatalytic reaction which in turn promotes the oxidation reaction for purifying HC, CO and the like from the exhaust gas as described below.

Referring further to Figs. 3 and 5, the second reactor 140 includes the SiC DPF carrier, i.e. the diesel particulate filter 144, with TiO₂ photocatalyst 145 coated thereon. At this time, the diesel particulate filter 154 includes plugging 144a for plugging each of exhaust outlets adjacent to intake inlets for the exhaust gas thereof and a porous filter wall 144b placed between intake inlets and exhaust outlets for filtering out the particulate matters (PM) from the exhaust gas. Further, as explained later in detail, the photocatalyst 145 promotes the reaction with low temperature plasma created in the low temperature plasma unit 142 and thus the reaction of oxidizing particulate matters, i.e. PM, collected in the diesel particulate filter 144.

Alternatively, it is preferred that the aforementioned intake inlets and exhaust outlets of the diesel particulate filter 144 be plugged alternately with the plugging 144a made of a conductive metal, and that surfaces of the plugging be coated with conductive metal. That is, if high voltage has been applied to the plugging 144a and thus the low temperature plasma has been created when the particulate matters in the exhaust gas are collected on the porous walls 144b while the exhaust gas flows along the porous walls 144b, the collected particulate matters can be easily and effectively oxidized and removed.

Referring to Figs. 3 and 6, the third reactor 160 includes the honeycomb ceramic carrier 164 that is coated with TiO₂ photocatalyst 165 and adsorber (Ads) made of potassium, barium and/or the like. At this time, the adsorber (Ads) serves to adsorb NOx, i.e. nitrogen oxide, for a certain period of time, and the photocatalyst 165 serves to react with the low temperature plasma created in the low temperature plasma unit 162 to adjust its reducing power when the NOx is reduced and the adsorber is thus regenerated. Further, the ceramic carrier 164 includes not only the photocatalyst 165 but also cocatalyst containing rhodium (Rd), silver (Ag) and/or nickel (Ni) in order to increase the reducing power of the photocatalyst 165.

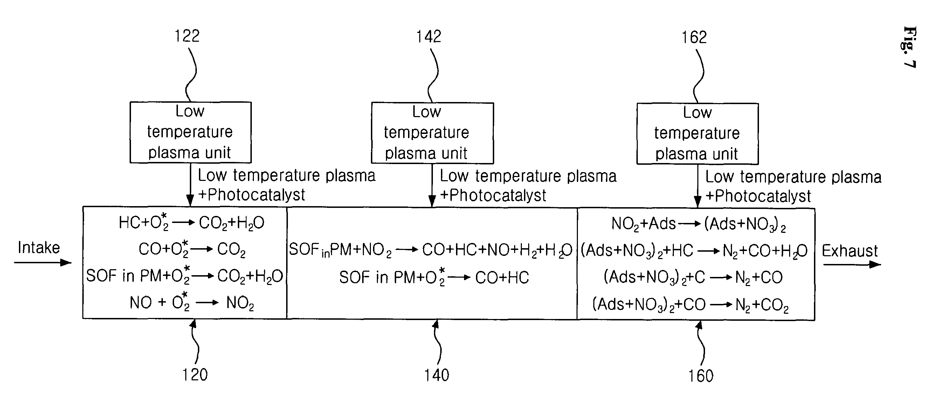

Fig. 7 illustrates a process of stepwise treating the pollutants in the exhaust gas within the respective reactors 120, 140 and 160 by the exhaust gas purification system according to the embodiment of the present invention. The process of purifying the exhaust gas of a diesel engine will be described with reference to Figs. 2 to 7.

As shown in Figs. 2 to 7, in the first reactor 120, the low temperature plasma unit 122 irradiates low temperature plasma onto the photocatalyst 125 and thus creates a large amount of active oxygen and free radicals. The active oxygen causes both HC, CO and NO in the exhaust gas and a part of soluble organic fractions (SOF) in the particulate matters (PM) to be oxidized. HC and CO are oxidized and purified into CO₂ and water, and the oxidized SOF is also purified into CO₂ and water. Further, NO corresponding to at least 90% of NOx is converted into NO₂ and then used as an oxidizing agent for the oxidation of the particulate matters (PM) and the resultant regeneration of the diesel particulate filter in the second reactor.

At this time, it is preferred that the controller 200 reduce the electric power applied to the low temperature plasma unit 122 to decrease the oxidation reaction by means of the photocatalyst 125 under the lean bum condition where oxygen is rich in the exhaust gas, whereas the controller raise the electric power applied to the low temperature plasma unit 122 to increase the oxidation reaction by means of the photocatalyst 125 under the rich bum condition where there is shortage of oxygen. Further, the controller 200 properly controls the amount of NO₂ to be used as an oxidizing agent in the second reactor 140 according to the concentration of the exhaust gas.

In the second reactor 140, the particulate matters (PM) that have not yet removed in the first reactor 120 are collected on the diesel particulate filter 144, and the particulate matters (PM) collected on the diesel particulate filter 144 are oxidized and converted into CO, HC, H₂, water, NO and the like by means of NO₂ in the exhaust gas created in the first reactor 120 and the free radicals and active oxygen created from the photocatalyst 145 coated in the second reactor 140. Trough such an oxidation reaction, the diesel particulate filter 144 in the second reactor 140 can be continuously regenerated. Furthermore, since the TiO₂ photocatalyst 145 that can be activated by the low temperature plasma is used as catalyst for use in regeneration of the diesel particulate filter 144, the diesel particulate filter 144 can be continuously regenerated even at a lower exhaust temperature. In addition, since the TiO₂ photocatalyst 145 can be rapidly activated through irradiation of the low temperature plasma, the time needed for regenerating the diesel particulate filter 144 can be greatly reduced.

At this time, the controller 200 controls the amount of electric power to be supplied to the low temperature plasma unit 142 according to the concentration of pollutants (HC, CO, PM, etc.) in the exhaust gas. In particular, it is preferred that the soluble organic fractions (SOF) in the particulate matters (PM) be partially oxidized into carbon monoxide (CO) and hydrocarbon (HC) having a short carbon chain rather than be completely oxidized into carbon dioxide and water. That is, the carbon monoxide and hydrocarbon may be used as a reducing agent for NOx in the third reactor 160.

In the third reactor 160, NOx in the exhaust gas passed through the first and second reactors 120 and 140 is adsorbed by means of the adsorber (Ads) and then kept in the honeycomb carrier 164 of the third reactor 160. Then, NOx adsorbed into the absorber (Ads) is reduced through the photocatalytic reduction reaction in which HC, CO and C in the exhaust gas are used as a reducing agent. The adsorber (Ads) can be again regenerated through such a reduction reaction.

At this time, the controller 200 can control the reducing power for NOx by controlling the supply of electric power to the low temperature plasma unit 162. Thus, the reduction reaction of NOx can be performed without being greatly subjected to the influence of oxygen even under the lean bum condition where oxygen is rich in the exhaust gas, and consequently, it is not necessary to supply an additional reducing agent for the NOx reduction. Moreover, the controller 200 can prevent nitrogen in the exhaust gas from being oxidized and thus the nitrogen oxide from being additionally produced by properly controlling the low temperature plasma unit 162.

In a case where the aforementioned exhaust gas purification system for a diesel engine is used to purify the exhaust gas of a diesel engine, the first reactor 120 can purify carbon monoxide and unburned hydrocarbon created at the low-temperature and low-load conditions regardless of the exhaust temperature. Further, the second reactor 140 can preferably collect the particulate matters (PM), which have been generally created in an accelerating period of the diesel engine, onto the diesel particulate filter 144 and can also continuously oxidize the collected particulate matters (PM) and thus continuously regenerate the diesel particulate filter 144 through the application of high voltage to the low temperature plasma unit 142 and the promotion of photocatalytic reaction.

Furthermore, the third reactor 160 can adsorb NOx, which is created early in the accelerating period of the diesel engine, to the adsorber (Ads) and then effectively remove NOx adsorbed to the adsorber (Ads) by using HC, C and CO, which are partially oxidized in the second reactor 140 and periodically created into the exhaust gas, as a reducing agent. Further, the present invention can easily control the production of HC, C and CO through the electric power control for the aforementioned first and second reactors 120 and 140, thereby contributing to the improvement in the NOx removal efficiency and energy consumption efficiency.

In addition, TiO₂ that is used as the photocatalyst 125, 145 and 165 in the respective reactors 120, 140 and 160 is excellent in the anti-poisoning against sulfur to such an extent that inherent photocatalytic performance can be maintained even when the concentration of sulfur components in the diesel fuel is 50 ppm or more, and thus, the reduction in performance due to the sulfur components in the diesel fuel can be prevented.

Although it has been described in the foregoing preferred embodiment of the present invention that the photocatalyst is employed in all the reactors 120, 140 and 160, the photocatalyst may be applied to at least one of the reactors, more preferably at least one of the reactors including the third reactor in which the adsorption and reduction of NOx are performed.

Furthermore, although it has not been illustrated in the accompanying drawings, the exhaust gas purification system of the present invention can warn the system malfunction through an output means such as warning sound or lamp when there is something wrong in the electric power or current applied to the respective reactors.

According to the present invention, NOx can be easily adsorbed to the adsorber and the adsorbed NOx can be easily reduced and removed without additional supply of the fuel or reducing agent under various combustion conditions of the diesel engine, by properly controlling the photocatalytic reaction. Further, there is little need for the periodic high-load condition for reducing and removing NOx. Therefore, there is an advantage in that the exhaust gas purification system and method of the present invention can be more preferably employed in the diesel car engine.

In addition, the present invention has solved the problems of the prior art in which additional fuel should be further injected to create an atmosphere where NOx can be reduced. Therefore, there is another advantage in that the fuel consumption can be greatly reduced.

Further, harmful materials such as HC, CO, PM and NOx can be purified at a relatively low temperature by solving the problems of the prior art in which catalyst is activated under the high exhaust temperature and used to purify the exhaust gas. Since the time needed for activating the catalyst is not substantially required, the exhaust gas purification efficiency can be enhanced.

Furthermore, the present invention can use the components, such as HC, CO, C or NO₂, in the exhaust gas as oxidizing or reducing agents for stepwise oxidation or reduction. Therefore, there is a further advantage in that the exhaust gas purification efficiency can be improved and the waste of energy needed in purifying the exhaust gas can also be reduced.

In addition, the present invention uses TiO₂, which is excellent in anti-poisoning against sulfur components, as photocatalyst. Therefore, there is a still further advantage in that reduction in durability of the system due to the sulfur components can be prevented and even diesel fuel containing the sulfur components greater than the conventional fuel can be used.

From the foregoing, the present invention has been described with reference to the specific embodiment thereof. However, various variations, modifications and changes to the present invention can be made in the art within the scope of the invention defined by the appended claims. Therefore, it should be construed that the foregoing descriptions and accompanying drawings do not restrict but illustrate the technical scope of the present invention.

## Claims

1. A system for purifying exhaust gas of a diesel engine, comprising:
a first reactor for oxidizing HC, CO, NO or particulate matters in the exhaust gas;
a second reactor for collecting the particulate matters in the exhaust gas passed through the first reactor onto a diesel particulate filter and oxidizing the collected particulate matters to regenerate the diesel particulate filter;
a third reactor including a light source, photocatalyst responsive thereto and adsorber, thereby adsorbing NOx in the exhaust gas passed through the second reactor with the adsorber and removing NOx through reduction reaction; and
a controller for controlling intensity of light from the light source according to concentration of the exhaust gas.

2. The system as claimed in claim 1, wherein the first reactor includes a light source of which light intensity can be adjusted by the controller, and photocatalyst responsive to the light source, thereby at least partially oxidizing HC, CO, NO or particulate matters through photocatalytic oxidation reaction.

3. The system as claimed in claim 1, wherein the second reactor includes a light source of which light intensity can be adjusted by the controller, and photocatalyst responsive to the light source, thereby oxidizing the particulate matters collected on the diesel particulate filter through photocatalytic oxidation reaction to regenerate the diesel particulate filter.

4. The system as claimed in claim 1, wherein the first reactor causes a part of HC, CO or particulate matters to be oxidized into CO₂ and NO to be oxidized into NO₂.

5. The system as claimed in claim 1, wherein the second reactor uses NO₂ in the exhaust gas passed through the first reactor as an oxidizing agent for oxidation of the particulate matters.

6. The system as claimed in claim 1, wherein the first, second and third reactors are consecutively installed within a casing having exhaust gas inlet and outlet.

7. The system as claimed in claim 1, wherein the light source is a low temperature plasma unit for irradiating low temperature plasma onto the photocatalyst.

8. The system as claimed in claim 7, wherein the low temperature plasma unit includes a rod-shaped ground electrode, a mesh-type discharge electrode for covering an exhaust gas passage in the reactor, and a ceramic insulation for supporting the discharge electrode in the reactor.

9. The system as claimed in claim 7, wherein the filter of the second reactor is alternately plugged with conductive metal at its intake inlets and exhaust outlets, and said metal function as electrodes.

10. The system as claimed in claim 1, wherein the photocatalyst is comprised of TiO₂.

11. The system as claimed in any one of claims 1, wherein the third reactor uses at least one of HC, CO and C in the exhaust gas passed through the second reactor as a reducing agent for reduction of NOx.

12. A method for purifying exhaust gas of a diesel engine, comprising the steps of:
at least partially oxidizing HC, CO, NO or particulate matters in the exhaust gas, in a first reactor;
regenerating a diesel particulate filter by collecting the particulate matters in the exhaust gas passed through the first reactor onto the diesel particulate filter and then oxidizing the collected particulate matters, in a second reactor; and
adsorbing NOx in the exhaust gas passed through the second reactor with adsorber and removing NOx through photocatalytic reduction reaction using a light source,
wherein an amount of NOx to be reduced is adjusted by controlling the light source of the third reactor.

13. The system as claimed in claim 12, wherein photocatalytic oxidation reaction using a light source is generated in the first reactor, and an amount of HC, CO, NO or particulate matters to be oxidized can be adjusted by controlling the light source of the first reactor.

14. The method as claimed in claim 12, wherein the particulate matters collected on the diesel particulate filter are oxidized in the second reactor through photocatalytic oxidation reaction using a light source, and an amount of HC or CO to be generated as a reducing agent in the third reactor can be adjusted by controlling the light source of the second reactor.

15. A method for purifying exhaust gas of a diesel engine, comprising the steps of:
at least partially oxidizing HC, CO, NO or particulate matters in the exhaust gas through photocatalytic oxidation reaction using a light source, in a first reactor;
regenerating a diesel particulate filter by collecting the particulate matters in the exhaust gas passed through the first reactor onto the diesel particulate filter and then oxidizing the collected particulate matters through photocatalytic oxidation reaction using a light source, in a second reactor; and
adsorbing NOx in the exhaust gas passed through the second reactor with adsorber and removing NOx through photocatalytic reduction reaction using a light source,
wherein an amount of NO₂ to be generated as an oxidizing agent in the second reactor, an amount of HC and CO to be generated as a reducing agent in the third reactor and an amount of NOx to be reduced in the third reactor are adjusted by controlling the light sources of the respective reactors.

16. The method as claimed in any one of claims 12, wherein each of the light sources of the respective reactors is a low temperature plasma unit, and the photocatalytic reaction in each reactor is controlled by controlling the supply of electric power to the low temperature plasma unit.

17. A method for purifying exhaust gas of a diesel engine, comprising the steps of:
(a) at least partially oxidizing HC, CO, NO or particulate matters in the exhaust gas;
(b) regenerating a diesel particulate filter and simultaneously obtaining at least one of HC, CO and C by collecting the particulate matters in the exhaust gas passed through step (a) onto the diesel particulate filter and then partially oxidizing the collected particulate matters; and
(c) adsorbing NOx in the exhaust gas passed through step (b) with adsorber and regenerating the adsorber through NOx reduction by causing at least one of HC, Co and C obtained in step (b) to be used in the NOx reduction reaction.

18. The method as claimed in claim 17, wherein the NOx reduction reaction is controlled in step (c) by controlling intensity of light causing photocatalytic reaction.

19. The method as claimed in claim 17, wherein NOx obtained in step (a) is used in step (b) to reduce the particulate matters collected onto the diesel particulate filter, and an amount of NOx to be generated is adjusted by controlling intensity of light causing photocatalytic reaction in step (a).

20. The method as claimed in claim 17, wherein an amount of HC, CO and C to be used as a reducing agent in step (c) can be adjusted in step (b) by controlling intensity of light causing photocatalytic reaction.

21. The method as claimed in any one of claims 17, wherein a low temperature plasma unit for irradiating low temperature plasma onto photocatalyst is used as a light source causing photocatalytic reaction.
